# EUROPÄISCHE PATENTSCHRIFT

(11) **EP 0 925 982 B1**
(45) Veröffentlichungstag und Bekanntmachung des Hinweises auf die Patenterteilung: **11.09.2002**
(21) Anmeldenummer: 98890379.5
(22) Anmeldetag: 23.12.1998
(51) Int. Cl.: B60K 11/00

(54) **Kühlluftauslass für ein Fahrzeug**
Cooling air outlet for vehicle
Sortie d'air de refroidissement pour véhicule

(30) Priorität: 23.12.1997 AT 81397 U
(43) Veröffentlichungstag der Anmeldung: 30.06.1999
(73) Patentinhaber: Steyr-Daimler-Puch Spezialfahrzeug AG & Co. KG, 1111 Wien (AT)
(72) Erfinder: Skoff, Gerhard Dr., 1130 Wien (AT)
(74) Vertreter: Rippel, Andreas, Dipl.-Ing.

(56) Entgegenhaltungen:
- DE-A- 2 138 951
- US-A- 4 413 668
- US-A- 4 463 653

## Beschreibung

Die Erfindung handelt von einem Kühlluftauslass für ein Fahrzeug, bestehend aus einem Grill und einem diesen umgebenden an einer Fahrzeugaussenwand angebrachten Rahmen. Insbesondere kann es sich dabei um Militärfahrzeuge und andere Fahrzeuge handelt, die einem Beschuß ausgesetzt sind. Daher wird der Grill auch meist ein ballistischer Grill sein.

Ein derartiger Kühlluftauslass ist etwa aus der EP 308 601 A2 bekannt. Bei Panzerfahrzeugen ist ein solcher am Heck, an der Oberseite der Wanne oder seitlich angeordnet, vorzugsweise aber an der Oberseite. Bei nicht gepanzerten Fahrzeugen ist er meist am Bug angeordnet. Die durch ihn ausströmende Kühlluft heizt den Grill auf eine Temperatur von 100 Grad Celsius und darüber auf.

Moderne Gefechtsfeldaufklärung und Zielerfassung wird in erster Linie mit Hilfe von sehr empfindlichen Wärmebildgeräten durchgeführt, die schwarz-weisse Videobilder liefern. Diese Geräte sprechen auf Differenzen der Oberflächentemperatur fester Körper an. Mit anderen Worten: je wärmer eine Oberfläche, desto heller erscheint sie am VideoBild. Dadurch werden solche sogenannten Hotspots auch auf große Entfernung erkannt. Ein auf 100 Grad erhitzter Grill stellt einen solchen Hotspot dar.

Es ist daher Ziel der Erfindung, den Grill in einer Wärmebildumgebung möglichst unsichtbar und somit möglichst schwer auffindbar zu machen.

Erfindungsgemäß wird das dadurch erreicht, daß der Rahmen den Grill nach aussen überragt und aus einem Hohlprofil besteht, das einen Strömungskanal mit einer Eintritts- und einer Austrittsöffnung bildet, wobei zwischen Eintritts- und Austrittsöffnung ein Druckgefälle herrscht.

Es wird von der Erkenntnis ausgegangen, daß heisse Gase am Wärmebild unsichtbar bleiben. Der überragende Rahmen stellt sicher, daß in einem weiten seitlichen Blickbereich der Grill selbst unsichtbar bleibt. Um ein langsames Aufheizen dieses Sichtschutzes zu verhindern, ist dieser als Strömungskanal ausgebildet, der seinerseits von einem Kühlmedium durchströmt ist. Diese Durchströmung wird durch das Druckgefälle hergestellt.

Das Druckgefälle kann auf verschiedenste Weise hergestellt werden. Entweder die Eintritts- oder Austrittsöffnung steht mit einer Druck- oder Unterdruckquelle im Fahrzeug (einem Innenraumventilator oder einem Gebläses für die Motorkühlung) in Verbindung, oder die Eintritts- oder Austrittsöffnung steht mit einem eigenen Gebläse in Verbindung. Das Druckgefälle könnte auch einfach durch den Fahrtwind hergestellt werden.

Im folgenden wird die Erfindung anhand von Abbildungen beschrieben. Es stellen dar:
- Fig. 1:: Eine Teilansicht eines Kampffahrzeuges mit einem neuerungsgemäßen Kühllufteintritt in einer ersten Ausführungsform,
- Fig.2:: dasselbe in einer zweiten Ausführungsform in größerem Maßstab.

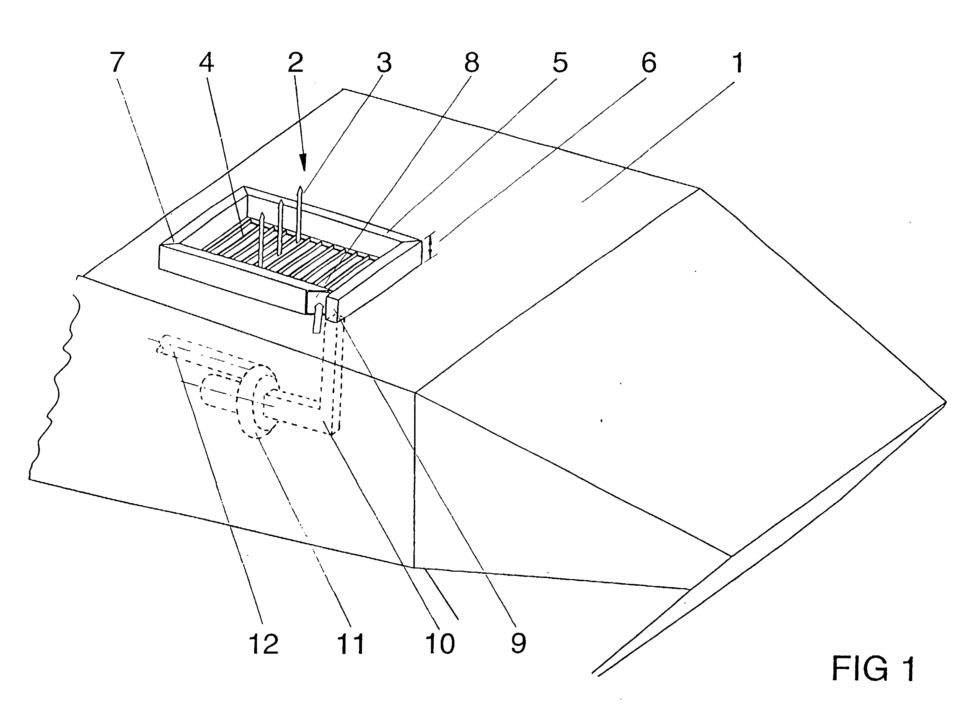

In Figur 1 ist die Wanne des Fahrzeuges nur angedeutet und deren angenähert horizontales Dachblech mit 1 bezeichnet. In diesem befindet sich ein Kühlluftauslaß 2, durch den Kühlluft 3, durch den Kühler des Motors auf 100 Grad Celsius erwärmt, ausströmt. Der Kühlluftauslaß 2 wird von einem Grill 4 und einem diesem umgebenden Rahmen 5 gebildet. Der Grill 4 ist ein von sehr kräftigen Stäben gebildeter ballistischer Grill. Der Rahmen 5 wird von vier in Gehrungen 7 aneinander anschließenden Hohlprofilen gebildet, die entweder von außen auf das Dachblech 1 aufgesetzt oder einwärts ragend eingesetzt sind. Das den Rahmen 5 bildende Hohlprofil hat eine gewisse Höhe 6 gegenüber den Stäben des Grills 4. Diese Höhe dient als Sichtschutz und bewirkt, daß der Grill 4 selbst von der Seite nicht sichtbar ist.

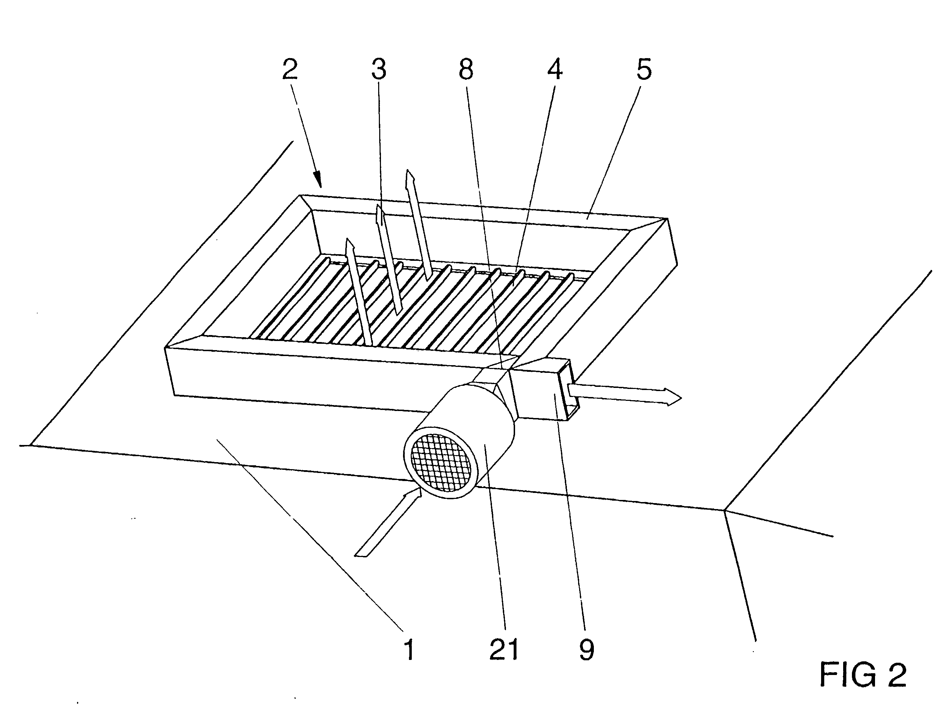

Die vier Seiten des Rahmens 5 bilden einen Strömungskanal mit einem Eintritt 8 (dort ist das Profil schräg abgeschnitten) und einem Austritt 9. Im gezeigten Ausführungsbeispiel ist dieser Austritt 9 über einen im Inneren der Wanne liegenden Kanal 10 mit einem Saugzuggebläse 11 verbunden, das durch einen Kanal 12 Frischluft in den Innenraum des Fahrzeuges liefert. Die Ausführungsform der Figur 2 unterscheidet sich davon dadurch, daß ein externes Gebläse 21 mit dem Eintritt des Rahmens 5 verbunden ist und der Austritt 9 ins Freie führt.

Auf die eine oder andere Weise durch die vier Seiten des Rahmens 5 geblasene Luft kühlt diesen ab, sodaß er sich durch die austretende Kühlluft nicht erwärmen kann. So bleibt der Rahmen auf einer Temperatur nahe der Umgebungstemperatur und ist von der Seite betrachtet auf einem Wärmebild des Fahrzeuges nicht erkennbar.

## Patentansprüche

1. Kühlluftauslass für ein Fahrzeug, bestehend aus einem Grill (4) und einem diesen umgebenden an einer Fahrzeugaussenwand (1) angebrachten Rahmen (5), **dadurch gekennzeichnet, daß** der Rahmen den Grill nach aussen überragt (6) und aus einem Hohlprofil besteht, das einen Strömungskanal mit einer Eintritts- und einer Austrittsöffnung (8,9) bildet, wobei zwischen Eintritts- und Austrittsöffnung ein Druckgefälle herrscht.

2. Kühlluftauslass für ein Fahrzeug nach Anspruch 1, **dadurch gekennzeichnet, daß** die Eintritts- oder Austrittsöffnung (8,9) mit einer Druck- oder Unterdruckquelle (11) im Fahrzeug in Verbindung steht.

3. Kühlluftauslass für ein Fahrzeug nach Anspruch 1, **dadurch gekennzeichnet, daß** die Eintritts- oder Austrittsöffnung (8,9) mit einem extern angeordneten Gebläse (21) in Verbindung steht.

## Claims

1. A cooling-air outlet for a vehicle, comprising a grill (4) and a frame (5) which encloses said grill and is provided on an outside wall (1) of the vehicle, wherein the frame projects beyond the grill to the outside (6) and comprises a hollow profile which forms a flow channel with an inlet opening and an outlet opening (8, 9), a difference in pressure prevailing between inlet opening and outlet opening.

2. The cooling-air outlet for a vehicle as claimed in claim 1, wherein the inlet opening or outlet opening (8, 9) is connected to a pressure or negative-pressure source (11) in the vehicle.

3. The cooling-air outlet for a vehicle as claimed in claim 1, wherein the inlet opening or outlet opening (8, 9) is connected to an external blower (21).

## Revendications

1. Echappement d'air de refroidissement pour véhicule consistant en une grille (4) et un cadre (5) ajouté entourant celle-ci sur la paroi extérieure (1) d'un véhicule, **caractérisé en ce que** le cadre déborde de la grille vers l'extérieur (6) et consiste en un profil creux qui forme un canal d'écoulement avec un orifice d'entrée et un orifice de sortie (8, 9), un gradient de pression régnant entre l'orifice d'entrée et l'orifice de sortie.

2. Echappement d'air de refroidissement pour véhicule selon la revendication 1, **caractérisé en ce que** l'orifice d'entrée ou de sortie (8, 9) est en liaison avec une source de pression ou de dépression (11) dans le véhicule.

3. Echappement d'air de refroidissement pour véhicule selon la revendication 1, **caractérisé en ce que** l'orifice d'entrée ou de sortie (8, 9) est en liaison avec une soufflerie disposée à l'extérieur (21).
